# EUROPEAN PATENT APPLICATION

(11) **EP 4 622 029 A1**
(43) Date of publication of application: **24.09.2025**
(21) Application number: 23812989.4
(22) Date of filing: 10.11.2023
(51) Int. Cl.: H02G 1/02, H02G 7/22, H01R 11/14, H02G 7/06, H02G 7/08, H01R 4/40, H01R 31/06, H01R 4/66

(54) **GROUND CONNECTION DEVICE AND HOISTING DEVICE FOR SAID GROUND CONNECTION DEVICE**

(30) Priority: 14.11.2022 EP 22383098
(71) Applicant: Red Electrica de España S.A.U., 28109 La Moraleja (Madrid) (ES)
(72) Inventor: TIRADO GÓMEZ, Francisco Javier, 28109 Alcobendas, Madrid (ES); MELIÁN RODRÍGUEZ, Ruyman, 28109 Alcobendas, Madrid (ES); FERNÁNDEZ ROSADO, Vicente, 28109 Alcobendas, Madrid (ES); DE RUZ MUÑOZ, Ricardo, 28109 Alcobendas, Madrid (ES); HERNÁNDEZ TOLEDO, Mariano, 28109 Alcobendas, Madrid (ES)
(74) Representative: ABG Intellectual Property Law, S.L.
(86) International application number: PCT/ES2023/070667
(87) International publication number: WO 2024/105291

(57) **Abstract**

The object of the invention relates to the technical field of placing and disassembling portable ground connections in electrical installations. A first aspect of the invention comprises a ground connection device and a hoisting device, as well as a system combining both, which are particularly useful in the grounding process in electrical installations. The hoisting device is characterized by a pole which can be made to be lightweight and allows the effortless hoisting and fixing of the ground connection to the electrical installation to be grounded. A second aspect of the invention comprises an installation method involving the use of the ground connection system, providing greater safety both to the operators carrying out said method and for the tools so that they are more durable.

## Description

### OBJECT OF THE INVENTION

The object of the invention relates to the technical field of placing and disassembling portable ground connections in electrical installations. A first aspect of the invention comprises a ground connection device and a hoisting device, as well as a system combining both, which are particularly useful in the grounding process in electrical installations.

The hoisting device is characterized by a pole which can be made to be lightweight and allows the effortless hoisting and fixing of the ground connection to the electrical installation to be grounded.

A second aspect of the invention comprises an installation method involving the use of the ground connection system, providing greater safety both to the operators carrying out said method and for the tools so that they are more durable.

### BACKGROUND OF THE INVENTION

Grounding (abbreviated as GRD hereinafter) processes in certain segments of an electrical installation today require practice, dexterity, and considerable physical effort. Among other problems, the substantial weight of the cable (its mean weight is one kilogram per meter) added to the weight of the clamp which is fixed to the electrical installation makes the grounding process a job that requires considerable physical effort, increasing the risk of injury. Furthermore, a greater height of the connection point of the portable ground connection increases the demand of the activity, increases the risk, and also adds the possibility of the operator losing their balance and falling into a live region.

Namely, there are known in the state of the art two methods for facilitating the GRD process in electric-power substations: conventional methods, which use poles; and methods which use ropes to lift the heavy elements of the ground connection. These are described in greater detail below, mentioning both their advantages and drawbacks.

The conventional GRD method with poles made of an insulating material is the most commonly used as well as the quickest method, so it is widely used both for placing and for removing portable ground connections. The conventional method consists of lifting and placing the ground connection fixing system by using poles made of an insulating material depending on the voltage level of the installation and the height thereof. The ground connection is fixed to the point of the installation where it is to be located, wherein it is usually fixed by means of clamps. As a drawback, this method requires practice, skill, and handling dexterity, because during the installation or the removal of the GRD, the operator must support the weight of the clamp and the GRD braid. Furthermore, if it is taken into account that the mean weight of the cable used in the GRD process is 1 kg/m, the weight of the poles is 2.2 kg per two meter segment, and the weight of the clamp is about 0.95 kg (which may vary according to the clamp model), the result is a very heavy weight involving a considerable strain, and it can cause dangerous situations given the lack of stability thereof at a considerable height.

Moreover, the installation and/or removal method for installing/removing GRD with the help of ropes is somewhat more complex than the one using only poles, given that it requires a system for slinging the rope towards the electrical installation. This method consists of lifting the GRD device by using a rope made of an insulating material, which is previously passed above the connection point for the connection to the electrical installation. The clamp is then hoisted by pulling on the rope until it is properly anchored in the desired location of the installation. Therefore, this method is somewhat slower, but in some cases it reduces efforts for placing the GRD, prevents the fixing clamp from accidentally falling onto the switchgear, and also prevents displacement towards other voltage phases of the installation, as occurs with poles having a heavy weight at the end thereof.

The use of ropes not only minimizes the physical effort (by not having to handle weight when at a height in an uncontrolled manner), but also eliminates the risks of losing one's balance and the possibility of making mistakes with adjacent positions of the installation.

As drawbacks of the method using ropes, it should be noted that ropes made of an insulating material are installed together with the ground connections while grounding (GRD) lasts. As a consequence, the ropes are exposed to weather conditions and wear due to friction occurring during the installation and the removal. Therefore, reusing these ropes would require a thorough evaluation of their condition, which is not always suitable or cost-effective, because it requires replacing the ropes, where this replacement represents a further cost.

The other negative aspect is the longer installation and disassembly time. When, due to internal requirements, work on the line takes more than one day, the grounding and the disassembly of the grounding must be carried out each day, so these operations reduce the effective workday for working on the line.

Over time, the tools and the usual manner of placing portable ground connections in substations based on the use of poles made of an insulating material have improved, introducing the use of key-locked safety ground connections, devices for slinging ropes, and ground clamps with rope, which has allowed a partial minimization of the risk for people and installations. However, there are still frequent accidents and incidents during the installation of GRD systems.

In that sense, the methods used today for the installation of ground connections, both those using ropes and those lacking ropes, present substantial limitations and risks (both for the personnel involved and for the switchgear):
a) Weight of the cables: The overall weight is heavy and involves the risk of injuries. When they are lifted, even if this is done in a suitable manner with the help of a second operator, the connection of the clamp is performed by only one of the operators involved in the installation. Any loss of balance, lightheadedness, human error, atmospheric conditions, etc., may thereby result in an accident or incident.
b) Safety of the components: The bayonet clamps normally used in the installation of ground connections have the drawback that when they are being placed or removed, if the rod is not properly fixed in the pole, the pole can become detached and fall on the people or switchgear (connections, supports, and remaining accessories of the electrical conduits used in the installation for the production, distribution, transport, and transformation of electrical energy) with the risk that this involves, even more so when working at a height.
c) Help with ropes: In the methods known in the state of the art that involve slinging a rope, it can be observed that this process is complex and does not assure safety throughout the entire process and requires the people involved to have the necessary strength and skills.

Patent application No. JP 2020 137268A describing a cable clamp and a cable connection method for construction is also known.

Patent application No. CN 112 152 147A is also known, which describes an auxiliary ground cable dismantling device and a ground cable dismantling system.

In view of the above, the need for a technical solution that allows safety to be improved during the installation method for installing portable ground connections in electrical installations is apparent.

The tools provided by the present invention, including a ground connection device and a hoisting device for said ground connection device, as well as the ergonomic system combining both, reduce the muscular-skeletal risk for the operator carrying out the installation of the ground connection and increase the safety of operators in charge of carrying out these actions. The invention thereby improves safety by reducing the efforts needed throughout the entire installation process and prevents damages to the switchgear or even to people in the event of falling elements (clamps, poles, etc.) during the installation process, as will be described in detail below.

### DESCRIPTION OF THE INVENTION

The present invention is a solution to the aforementioned problems by means of a ground connection device for grounding the potential in an electrical installation according to claim 1, a hoisting device for hoisting the ground connection device according to claim 6, a ground connection system according to claim 11, and an installation method for installing the ground connection according to claim 13. Preferred embodiments of the invention are defined in the dependent claims.

A first inventive aspect relates to a *ground connection device* for the discharge of an electrical installation comprising:
- *a grounding clamp with first coupling means adapted for being coupled to a part of the electrical installation;*
- *a discharge cable adapted for putting the grounding clamp and a grounding element in electrical communication;*
- *a first pole with a first end and a second end opposite the first end, wherein the first pole comprises:*
   *second coupling means located at the first end adapted for being coupled to the grounding clamp,*
   *at least one longitudinal, user-operable region proximal to the second end,*
      *wherein the user-operable region comprises:*
      *means for acting on the first coupling means to open and close the grounding clamp, allowing the coupling to the part of the electrical installation, and*
      *means for acting on the second coupling means to couple and decouple the grounding clamp with respect to the first pole; and*
      *an attachment element for being attached to a hoisting rope or cable.*

In the context of the present invention, electrical installation will be understood to mean any conductor intended for transporting electrical energy, which is located at a height not readily accessible without the use of support instruments, and which requires being grounded. An example of an electrical installation is an electric-power substation (for example, conventional air insulated substations, often abbreviated AIS, or gas insulated substations, abbreviated GIS).

The objective of the invention is put a segment of said electrical installation at ground potential by means of placing ground connections in "grounding" (or abbreviated as GRD) processes, or to remove the ground connections once they are no longer needed.

The ground connection device according to the first aspect of the invention is adapted for being coupled to a part of the electrical installation. This coupling is carried out by means of the grounding clamp.

The means incorporated in the clamp to achieve the fixing thereof in the electrical installation are identified as first coupling means.

The ground connection device also comprises a discharge cable putting the grounding clamp and a grounding element in electrical communication. This grounding element is usually a rod driven into the ground, or into substations, is a fixed GRD point attached to a mesh network of the installation with good conduction conditions. The grounding clamp is therefore at ground potential at all times.

The clamp is a heavy element, as is the ground discharge cable as described. According to the first aspect of the invention, the handling thereof is carried out by means of a first pole. The first pole has a first end intended for being coupled to the clamp and a second end, the end intended for being handled by the user. The coupling between the first end of the first pole and the clamp is by means of the so-called second coupling means.

Preferably, the first and second coupling means refer to non-permanent coupling means. The first coupling means allow the coupling and decoupling of the grounding clamp with respect to the installation. The second coupling means allow the reuse of the first pole given that said pole can be used for several grounding clamps at multiple points of the electrical installation.

These couplings are user-operable, although the grounding clamp is located in a lifted position. It particularly has means for acting on the first coupling means such that the clamp can be coupled and decoupled through these means located in the first pole.

Likewise, the grounding clamp and the pole are disconnected through means for acting on the second coupling means such that, once the first pole has been used and the grounding clamp is fixed to the electrical installation, the first pole can be used elsewhere with another clamp. The means for acting on the first coupling means and the means for acting on the second coupling means are positioned in a region proximal to the second end of the first pole such that the user can act on any of them in an independent and accessible manner by simply operating on the part of the first pole accessible to said user.

Lastly, this first pole has an attachment element for being attached to a hoisting rope or cable allowing it to interact with a device according to a second aspect of the invention that will be described below.

In a preferred embodiment of the ground connection device, *the attachment element is positioned proximal to the first end of the first pole and spaced apart from said first end.*

This spaced apart specific position facilitates the operation of hoisting the ground connection by preventing collisions between the hoisting elements, such as, for example, the rope and the grounding clamp, which is a heavy element and could get caught on something. The proximal position condition means that this hoisting effort is exerted close to the element with the greatest weight, i.e., the grounding clamp.

In a preferred embodiment of the ground connection device, *the attachment element is rotational about the first pole.*

Since the attachment element is provided with one degree of freedom against rotation, two advantages are achieved, one is the rope or hoisting element can be readily fixed without having to orient the first pole with the heavier elements already coupled to it: the clamp and the discharge cable. The second advantage is that once it is hoisted, the fixing position of the rope or of the hoisting element does not involve the orientation of the pole and said pole can freely rotate about its main axis, allowing the clamp to be oriented without the hoisting effort being affected.

In another preferred embodiment of the ground connection device, *the attachment element comprises a first opening for the guided passage of the hoisting rope or cable and a second opening for the passage of the discharge cable.*

According to this embodiment, the attachment element allows the simple fixing of the hoisting rope or cable, for example by means of a knot or a carabiner. Additionally, the second opening for the passage of the discharge cable allows the level of safety to be increased because at least at this point, the cable being kept snugly against or close to the first pole is imposed. If the opening allows the passage of the discharge cable but not the grounding clamp, accidental decoupling between the grounding clamp and the first pole would give rise to the falling thereof. This point of attachment means that the clamp hangs from a point proximal to the first end of the first pole, preventing it from falling to the position of the user.

In any case, the attachment of the discharge cable to the second opening can also be with by means of a carabiner or a similar connection element.

In an even more preferred embodiment, *the first opening and the second opening are located on opposite sides with respect to the first pole.*

Arranging both openings diametrically opposite with respect to the first pole allows, during the hoisting operation, the hoisting rope or cable and the discharge cable not to become entangled with one another and generate electrical risks or make the installation task difficult for operators.

When the attachment element is rotational about the first pole and incorporates two diametrically opposite openings, the two openings maintain the condition of being as spaced apart from one another as possible regardless of the orientation they may adopt.

In a second inventive aspect, the invention provides a hoisting device suitable for hoisting a ground connection device according to the first inventive aspect and according to any of the embodiments, wherein this second inventive aspect comprises:
- *a hook configured for hanging on a part of the electrical installation;*
- *a second pole attached to the hook;*
- *a pulley attached to the hook for the passage of a hoisting rope or cable of a ground connection device;*
*wherein the hook comprises a mechanical connection for the attachment with the second pole configured for keeping said second pole spaced apart from the pulley.*

The distance between the ground (for example the rod inserted into the ground) and the part of the electrical installation to be grounded is usually substantial, for example, more than 7 meters. The hoisting device of the second inventive aspect is designed for cooperating with the ground connection device of the first inventive aspect, for the purpose of positioning it at a great height in a safe and effortless manner.

The device according to this second aspect of the invention comprises a hook which is intended for supporting the weight of the mass to be hoisted, at least the ground connection clamp with the discharge cable in addition to the first pole which is coupled to the clamp.

A second pole is attached to the hook and this is what allows the hook to be lifted up to the part of the electrical installation that will perform load support functions. This second pole does not have to be heavy because it must also only be strong enough so as to handle the hook and hang it from the electrical installation. The weight of the ground connection device is not supported by the second pole by rather by the hook once it has been hung from the electrical installation.

The device according to this second aspect of the invention comprises a pulley attached to the hook for the passage of a hoisting rope or cable of a ground connection device. This pulley is what receives from the hoisting rope or cable the strains of the weight of the ground connection. According to this second aspect of the invention, the weight is transmitted directly to the hook and not to the second pole, which allows easy handling given that the second pole is minimally influenced by the weight of the ground connection device when it is hoisted and does not require any additional reinforcement.

Additionally, the device according to this second aspect of the invention comprises a mechanical connection between the hook and the second pole intended for ensuring the spacing between the second pole and the pulley. With this configuration, the load is transmitted directly from the pulley to the hook and the second pole does not interfere in the hoisting process by acting on the pulley while allowing control of the hoisting process to be effectively maintained.

In a particular embodiment of the hoisting device, *the hook comprises a load anchor for the attachment with the pulley such that, in the operative mode, the second hook, the load anchor, and the pulley establish a straight load line.*

In the scope of this invention, "operative mode" will be understood to mean the moment in which the hoisting device is effectively used for lifting the ground connection device to the part of the electrical installation to be grounded. This is the time at which there is the greatest lifting load.

Additionally, "straight load line" will be understood to mean an imaginary straight line passing through the three elements: the hook, the load anchor, and the pulley.

The support of the load is established on the hook and the weight load is applied on the pulley. The load anchor is thereby positioned in the middle and is pulled by the ends. The alignment of the three elements in the direction of the load prevents the occurrence of moments which tend to cause rotation, and furthermore, it is not done with the interposition of the second pole, so the load has no influence on the handling of the second pole.

This allows the second pole not to be subjected to efforts except the effort needed for hoisting the hook before being in the operative mode; this is why it can be very lightweight.

In an even more particular embodiment of the hoisting device, *the straight load line allows a position parallel to the direction in which the second pole extends.*

Allowing a parallel position must be interpreted to mean that the elements which are aligned in the operative mode have degrees of freedom between them which allow relative rotation but, however, once under the load of the weight, they naturally tend to be aligned. In this operative mode in which they are aligned, the second pole is positioned parallel to and spaced apart from the alignment formed by the hook, the load anchor, and the pulley.

According to this embodiment, the second pole has a vertical natural position which allows handling the hook without interfering with the pulley and without sustaining moments due to the load of the pulley. The pulley has a diameter that spaces apart the lines of the rope or cable passing through its groove. The spacing of the second pole that is arranged in parallel allows there not to be mechanical interferences with the pulley.

In another particular embodiment of the hoisting device as described above, *the attachment between the pulley and the second hook is rotational.*

The free rotation of the attachment between the pulley and the second hook allows the pulley to be able to rotate, causing the two lines of the rope to be positioned as required while handling the ground connection device and its first pole. This rotation, according to this embodiment, makes the orientation of the pulley independent from the position of the second pole, so the operator holding the second pole can be position themselves without bothering the ground connection device handling operations.

In another embodiment of the hoisting device, *the attachment between the second pole and the mechanical connection is by means of an attachment capable of regulating the angular position.*

In this embodiment, the second pole has an additional degree of freedom with the hook allowing the angular positioning of the second pole with respect to the mechanical connection such that before hanging the hook, the orientation thereof can be left adapted depending on the specific conditions of access to the electrical installation, preferably when it is a cable or elongated element and the transverse direction is the preferred direction, requiring a specific position of the second pole for operating comfortably.

In a preferred embodiment of the hoisting device, *the second pole is telescopic.*

The second pole has fewer effort requirements than the first pole; therefore, it can be more lightweight. A telescopic configuration means that the hook can be installed in electrical installations with substantial heights by simply using more telescopic segments.

In a third inventive aspect, the invention relates to *a ground connection system comprising:*
- *a ground connection device according to any of the embodiments described above,*
- *a hoisting device according to any of the embodiments described above,*
- *a hoisting rope or cable.*

The system combines a ground connection device according to any of the described examples, and a hoisting device, also according to any of the described examples. Additionally, the interaction between the hoisting device and the ground connection device is by means of the hoisting rope or cable which allows the hoisting of the ground connection device and the subsequent fixing thereof in the electrical installation by means of the hoisting device.

The hoisting rope or cable passes through the groove of the pulley of the hoisting device, giving rise to two lines, fixing a first end of a line of said hoisting rope or cable in the attachment element of the ground connection device. The other line is the one handled by the user to hoist the ground connection device.

Advantageously, the ground connection system is intended for performing the work of placing and removing portable ground connections safely and ergonomically, minimizing the risks inherent to this activity.

In a fourth inventive aspect, the present invention provides an installation method for installing a ground connection device by means of the ground connection system of the third inventive aspect, comprising the following steps:
*a) installing the hoisting rope or cable in the pulley of the hoisting device;*
*b) fixing a first end of the hoisting rope or cable in the attachment element of the ground connection device;*
*c) lifting the hook by means of the second pole and hanging the hook in a part of the electrical installation close to the part of the electrical installation where the grounding clamp of the ground connection device is to be fixed for the discharge of said electrical installation;*
*d) pulling on the hoisting rope or cable, through a first strand opposite the strand which contains the end attached to the attachment element of the ground connection device, until the grounding clamp is lifted and in a region proximal to the part of the electrical installation where the grounding clamp of the ground connection device is to be fixed;*
*e) while the grounding clamp remains hoisted, positioning the grounding clamp in the part of the electrical installation where it is to be fixed by acting by means of the first pole, and once the grounding clamp is positioned, acting on the first coupling means to close the coupling for the fixing thereof to the part of the electrical installation;*
*f) decoupling the first pole from the grounding clamp by acting on the second coupling means;*
*g) lowering the first pole by means of the hoisting rope or cable;*
*h) releasing the first end of the hoisting rope or cable from the attachment element of the ground connection device;*
*i) releasing the hook by acting on the second pole.*

According to this method, both the grounding and the hoisting device cooperate with one another, both being suitably designed for cooperating in this assembly method. In particular, the hoisting device is lightweight and allows effortlessly lifting and hanging the hook, leaving the pulley with the hoisting rope or cable available for lifting the ground connection device which is the heaviest element.

The ground connection device is lifted by two operators, one who is only in charge of using the pulley by applying the lifting force, and the other operator who, by means of the first pole and without having to support a significant weight of the grounding clamp and of the discharge cable, is in charge of suitably orienting and positioning the grounding clamp in the electrical installation, fixing it thereto.

In that moment, a first pole is decoupled, and even in this operation of lowering the first pole, there are means which increase safety given that it is carried out in a controlled manner through the pulley.

The disconnection of the first end of the hoisting rope or cable from the attachment element of the ground connection device allows the first pole to be reused for another ground connection clamp and discharge cable assembly. The release of the hook also allows the hoisting device to be reused for these other ground connection device installations.

In one embodiment of the installation method, *the second opening, which is intended for the discharge cable, further comprises manual opening means, and wherein the method further comprises the following steps:*
- *before step d) of hoisting the grounding clamp, passing the discharge cable through the second opening;*
- *in step g), lowering the first pole guided by the discharge cable; and*
- *releasing the first pole from the discharge cable.*

According to this embodiment, there is an intermediate connection of the discharge cable to the first pole which means that, among other safety aspects, that in the event of the accidental disconnection of the grounding clamp, the same falls, hanging from the discharge cable without reaching the ground because it would also be hanging from the support point of the hoisting rope or cable hanging from the pulley. the discharge cable (1.2) and

In a preferred embodiment of the ground connection system according to the third inventive aspect and of the method according to any of the embodiments described above,
- *the attachment between the hoisting rope or cable and the first opening of the attachment element with the first pole, or*
- *the attachment between the discharge cable and the second opening of the attachment element with the first pole, or*
- *both*
*is by means of a carabiner.*

In summary, the main advantages of the use of the ground connection system of the invention and of the installation method according to the fourth inventive aspect are the following:
- It minimizes physical effort, preventing injuries to people as they do not have to handle weight at a height in an uncontrolled manner.
- It allows the ground connection device to be directly hoisted to the chosen part of the electrical installation (for example, one of the phases of a conductor of said installation), without the possibility of being diverted to other phases under voltage.
- It eliminates the risks of the operators/users who are carrying out the installation from losing their balance, and it minimizes the possibility of error with adjacent positions of the electrical installation.
- It provides a secure fixing of the grounding clamp of the ground connection device, without the possibility of uncontrolled falling. In the event that the grounding clamp comes off said first pole once said ground connection device was being hoisted, the ground connection device would be left hanging on the second pole.
- It allows the recovery of the hoisting ropes or cables, preventing the wear thereof due to weather. As mentioned above, prolonged exposure of the hoisting ropes or cables to conditions of heat, humidity, and solar radiation prevent them from being able to be reused.
- As a result of the use of the pulley, less effort and less wear due to friction of the hoisting ropes or cables, which facilitates their reutilization.
- Reducing or eliminating the use of potential drops in electrical installations, since with this system it is possible to access higher points, higher than seven meters (for example, current state-of-the-art commercial systems reach up to eight meters in altitude with the identified difficulties, so there is a need to be able to carry out grounding at such a height).
- Preferably and according to a specific embodiment, the method and system of the invention use clamps with a safety key, whereby minimizing human errors of disconnecting in the incorrect order (for example, first disconnecting the clamp proximal to the ground connection element from the ground instead of starting the disconnection in the upper part).
- The clamps have good connectivity with low resistance (for example, with short circuit currents having an Isc value = 40 kA /s). Furthermore, the clamps can be provided with a safety key to prevent the human error of removing it from the ground before the top part (in electrical contact with the electrical installation or the conductor to be isolated).
- The invention involves a minimal implementation cost both at the level of the grounding system (which does not require any major equipment) and allows using the ground connection device for discharging the electrical installation.

All the features and/or steps of the methods described in this specification (including the claims, description, and drawings) can be combined in any combination, except for combinations of such mutually exclusive features.

### DESCRIPTION OF THE DRAWINGS

These and other features and advantages of the invention will become more apparent from the following detailed description of preferred embodiment, given only by way of illustrative and non-limiting example, in reference to the attached figures.
Figure 1 shows a perspective view of an embodiment of the ground connection device, wherein the first pole has been shortened to show enlarged views of the details.
Figure 2 illustrates in greater detail the first pole of the ground connection device, particularly in the region of the attachment element.
Figure 3 shows a perspective view of an embodiment of the hoisting device, wherein in this case the second pole is not shown complete in order to allow a better view of the details of the region of the hook.
Figure 4 shows the hoisting device according to an embodiment of the present invention in conditions of use with the passage of a hoisting rope through the groove of the pulley.
Figure 5A shows a global view of how the ground connection is placed close to the part of the electrical installation to be grounded.
Figure 5B shows with a higher degree of detail the region demarcated with the dashed line in Figure 5A.
Figure 6A shows how the grounding clamp is coupled with the first pole.
Figure 6B shows a subsequent step in which a carabiner is connected to the attachment with the first pole, passing the discharge cable through same.
Figure 7 shows a first hoisting moment of the ground connection device by means of the hoisting device according to one embodiment. If, for any reason, the ground connection clamp was to come off the first pole as observed in this figure, said hook would be suspended and attached to the first pole without falling to the ground in an uncontrolled manner and without generating safety problems or damages in the switchgear.
Figure 8 shows how a carabiner is connected to the strand of the hoisting rope or cable and to the attachment element through the first opening for the guidance of the hoisting rope or cable.
Figure 9A shows how a first operator pulls on one end of the hoisting rope or cable passing through the pulley of the hoisting device (not shown) for lifting the first pole of the ground connection device.
Figure 9B shows the region close to the region demarcated with the dashed line in Figure 9A.
Figure 10 shows how a second operator accompanies the first pole through the longitudinal region proximal to the second end (or gripping region) to facilitate the hoisting thereof.
Figure 11A illustrates how, once the first pole is lifted and the ground connection clamp is oriented, said ground connection clamp is placed in the connection site in the electrical installation where it is to be grounded (for example, in one of the phases of the conductor of the installation) and it is then fixed.
Figure 11B shows an enlarged view of the region demarcated with the dashed line in Figure 11A.
Figure 12A shows how the first pole is disconnected from the grounding clamp and the controlled lowering of said first pole is then performed, with the discharge cable sliding through the carabiner.
Figure 12B shows an enlarged view of the region demarcated with the dashed line in Figure 12A.
Figure 13A shows the first pole, lowered on the ground, still having carabiners that have not been disconnected.
Figure 13B shows what the first pole looks like on the ground after decoupling the carabiners.

### DETAILED DESCRIPTION OF THE INVENTION

Particular embodiments of the invention which exclusively seek to illustrate and clarify the way for executing the invention are described below. Therefore, it is to be understood that the embodiments set forth in the detailed description of the present document are merely by way of example and are illustrative of some embodiments.

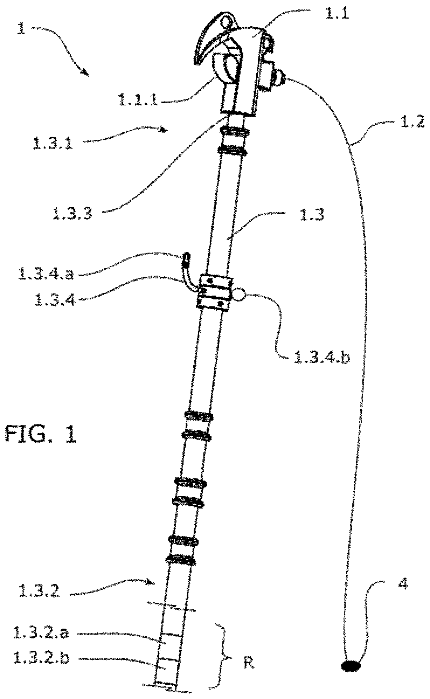

According to a first example, Figure 1 illustrates a preferred embodiment of a ground connection device (1). The ground connection device (1) comprises:
- a grounding clamp (1.1) with first coupling means (1.1.1) adapted for being coupled to a part (3.1) of an electrical installation (3);
- a discharge cable (1.2) adapted for placing the grounding clamp (1.1) and a grounding element (4) in electrical communication;
- a first pole (1.3).

The grounding clamp (1.1) according to this embodiment is in the form of a jaw clamp adapted for being fixed, for example, to a conductive cable. The connection of the grounding clamp (1.1) with an end of the discharge cable (1.2) can be observed in the rear part, whereas the other end is connected to a grounding element (4), for example a rod driven into the ground.

The grounding clamp (1.1) is coupled to an end of the first pole (1.3). It is thereby possible to distinguish in the first pole (1.3) a first end (1.3.1) and a second end (1.3.2) opposite the first end (1.3.1). The second end is what is directly gripped by the user and what allows to act remotely, for example on the grounding clamp (1.1).

The first pole (1.3) thereby comprises:
- second coupling means (1.3.3) located at the first end (1.3.1) and adapted for being coupled to the grounding clamp (1.1);
- at least one longitudinal, user- or operator-operable region (R) proximal to the second end (1.3.2), wherein the user-operable region (R) comprises:
   means (1.3.2.a) for acting on the first coupling means (1.1.1) to open and close the grounding clamp (1.1), allowing the coupling to the part (3.1) of the electrical installation (3), and
   means (1.3.2.a) for acting on the second coupling means (1.3.3) to couple and decouple the grounding clamp (1.1) with respect to the first pole (1.3), as well as
   an attachment element (1.3.4) for being attached to a hoisting rope or cable (5).

The user holds the first pole (1.3) as they have access to the user-operable region (R) and this is where the described means (1.3.2.a, 1.3.2.b) are located. One embodiment of these means uses segments which allow rotation such that the user applies a rotation torque, such that this actuation is transformed in the upper part of the first pole (1.3) into the action of opening or closing or into the action of coupling and decoupling.

According to one embodiment, the rotation torque is transmitted by means of an inner element that transmits the rotation to the first end (1.3.1), wherein either the rotation is used directly in the action as in the case of the coupling and decoupling operation or else is transformed into an opening and closing movement. An example of intermediate element that allows the transformation of the rotation into an opening and closing movement is the worm screw acting on a rack.

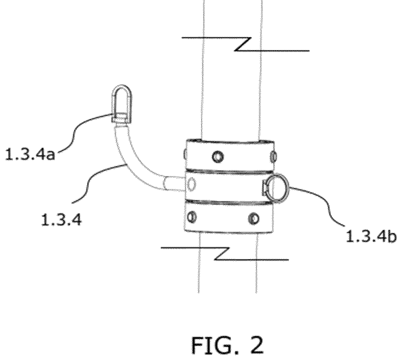

Figure 2 illustrates in greater detail the region of the first pole (1.3) around the attachment element (1.3.4) which allows the hoisting by means of the hoisting device (2). The attachment element (1.3.4) acts as a brace or rotational ring exhibiting freedom of rotation about the main axis of the first pole (1.3). The attachment element (1.3.4) is adapted for being positioned according to the axial direction at an intermediate point and spaced apart from the grounding clamp (1.1).

The attachment element (1.3.4) has two openings (1.3.4.a, 1.3.4.b): a first opening (1.3.4.a) for the connection with a hoisting device (2), which in this example is carried out by means of a first carabiner (6.1), and a second opening (1.3.4.b), which in this example is used to hold a second carabiner (6.2) through which discharge cable (1.2) passes. The first opening (1.3.4.a) is positioned diametrically opposite the second opening (1.3.4.b).

Preferably, the attachment element (1.3.4) is assembled in a position proximal to the first end (1.3.1) of the first pole (1.3), spaced at about 70-80 cm from the first end (1.3.1) of the first pole (1.3) where the grounding clamp (1.1) is connected. In this case, the grounding clamp (1.1) uses a universal head.

The distance between the grounding element (4) which is located on the ground and the part (3.1) of the electrical installation (3) typically exceeds 7 meters. Therefore, hoisting the grounding clamp (1.1) is a challenge on a technical level, and possible damages to the switchgear of the electrical installation (3) should be prevented when problems arise during the hoisting operation, for example, because it falls given its substantial weight.

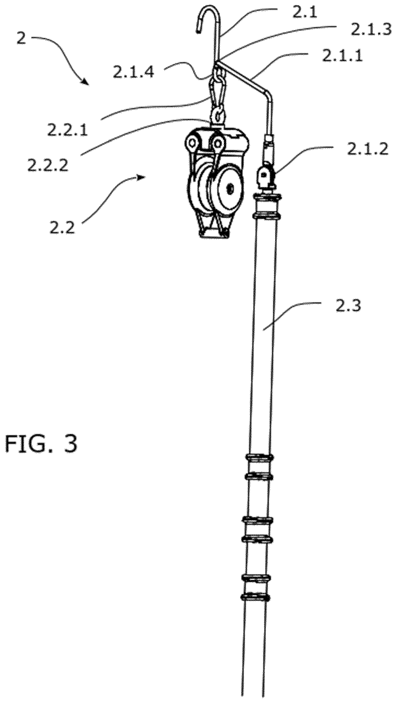

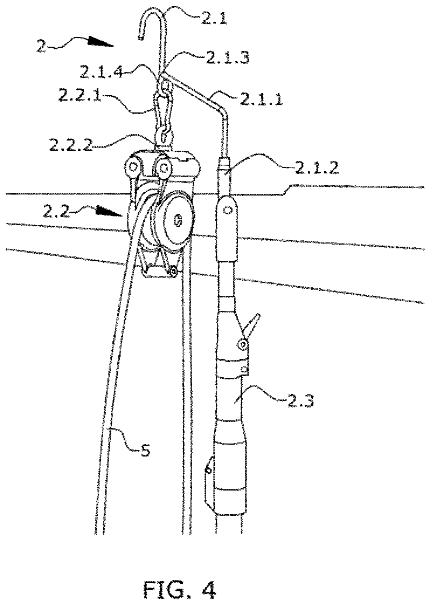

For this purpose, according to the example being described, the hoisting device (2) illustrated in the perspective view in Figures 3 and 4, where the hoisting device is conceived for cooperating with the ground connection device (1), is used.

As shown in Figures 3 and 4, the hoisting device (2) comprises:
- a hook (2.1) configured for hanging on a part (3.1) of the electrical installation (3);
- a second telescopic pole (2.3) attached to the hook (2.1);
- a pulley (2.2) attached to the second hook (2.1) for the passage of a hoisting rope or cable (5) of a ground connection device (1);

According to this embodiment, the hook (2.1) comprises a mechanical connection (2.1.1) for the attachment with the second pole (2.3) configured for keeping said second pole (2.3) spaced apart from the pulley (2.2). In this embodiment, the hook (2.1) comprises a load anchor (2.1.4) for the attachment with the pulley (2.2) such that, in the operative mode, the hook (2.1), the load anchor (2.1.4), and the pulley (2.2) establish a straight load line. The attachment between the pulley (2.2) and the hook (2.1) is rotational; and the attachment between the second pole (2.3) and the mechanical connection (2.1.1) is by means of an attachment capable of regulating the angular position (2.1.2).

With this configuration, the hoisting rope passes through the groove of the pulley (2.2), with the weight resting on the shaft of the pulley (2.2). The alignment of the three elements, the pulley (2.2), the load anchor (2.1.4) supporting the pulley (2.2), and the hook (2.1) in turn supporting the load anchor (2.1.4), prevents the occurrence of torques in the event of load variations.

The second pole (2.3) is spaced apart by means of a mechanical connection (2.1.1) in this embodiment in the form of an oblique rod, such that the orientation and position of the second pole (2.3) does not depend on the loading state. That is, the second pole (2.3) is not part of the chain of elements being pulled by the load of the weight and aligned: the pulley (2.2), the load anchor (2.1.4), and the hook (2.1), but rather is connected to the hook for the handling thereof.

Angular regulation (2.1.2) allows the orientation and position of the described elements to be maintained and the second pole (2.3) to be able to adopt an orientation that is comfortable for the user or operator.

Preferably, the first pole (1.3) and second pole (2.3) can be manufactured from fiberglass or other electrically conductive insulating materials.

The ground connection device (1) is designed to facilitate the securing of the first pole (1.3) and to ensure the stability of said ground connection device (1) during the hoisting operation for arranging the grounding clamp (1.1) in the electrical installation (3), for example, conventional air insulated substations, often abbreviated AIS.

The hoisting device (2) and the ground connection device (1), together with the hoisting rope or cable (5), are integrated in an installation system for installing a grounding. Additionally, in said system, the second opening (1.3.4.b) of the first pole (1.3) is intended for connecting the discharge cable (1.2) to the first pole (1.3), for example by means of a carabiner (6.2). In this ground connection system, the connection between the hoisting rope or cable (5) and the first opening (1.3.4.a) of the attachment element (1.3.4) with the first pole (1.3), and the connection between the discharge cable (1.2) and the second opening (1.3.4.b) of the attachment element (1.3.4) with the first pole (1.3) is by means of carabiners (6.1, 6.2). The carabiners (6.1, 6.2) facilitate the sliding passage of the rope or a cable and allows the rapid coupling and decoupling, maintaining a high level of safety.

Lastly, the invention also comprises a method which uses the ergonomic grounding system (1) for placing or removing a portable grounding, GRD, in an electrical installation (3). Preferably, one embodiment of said method is performed by at least two operators (O1, O2). For example, a first operator (O1) handles the hoisting rope and a second operator handles the ground connection device (1), for example through the first pole (1.3).

The method comprises performing the following steps using the grounding system (1) described above:
- Installing the hoisting rope or cable (5) in the pulley (2.2) of the hoisting device (2). Figure 4 shows a detail of the rope with the two lines in lowering positions and spaced apart from the second pole (2.3).

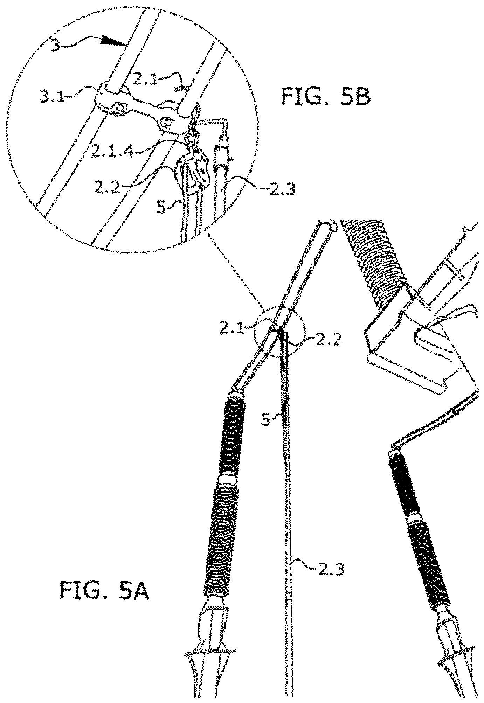

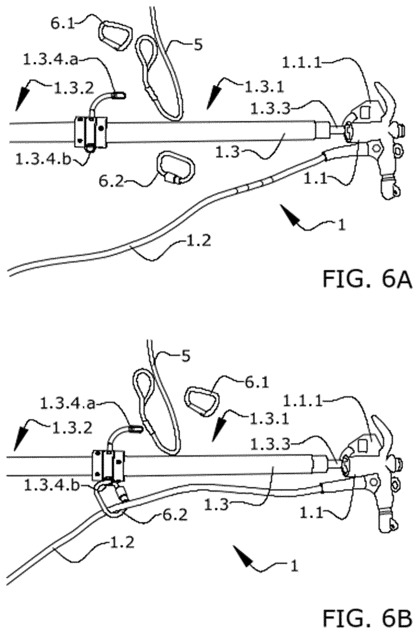

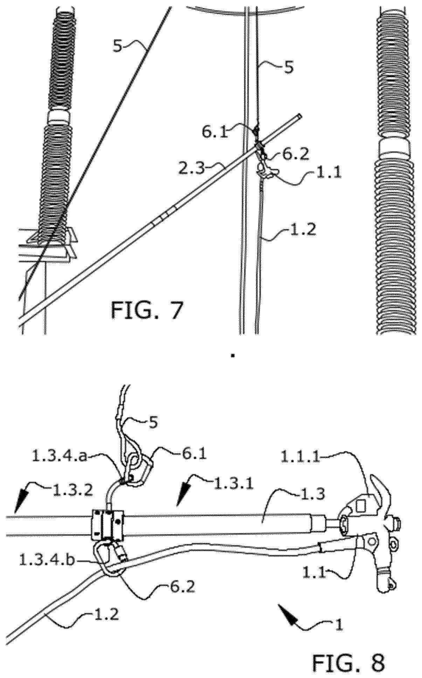

- Fixing a first end of the hoisting rope or cable (5) in the attachment element (1.3.4) of the ground connection device (1). This attachment can be carried out through a first carabiner (6.1) which is introduced in the first opening (1.3.4.a).
- Lifting the hook (2.1) by means of the second pole (2.3) and hanging the hook in a part of the electrical installation (3) close to the part (3.1) of the electrical installation (3) where the grounding clamp (1.1) is to be fixed for the discharge of said electrical installation (3) through the discharge cable (1.2); as observed in Figure 5A and in the enlarged detail of Figure 5B. This operation is simple and requires little effort as a result of said second pole (2.3) being telescopic. This operation can be carried out, for example, by the first operator (O1).
- Passing the discharge cable (1.2) through the second opening (1.3.4.b), for example, using a second carabiner (6.2), as depicted in Figure 6B. Figure 6A shows the first opening (1.3.4.a) arranged to receive a first carabiner (6.1) and the second opening (1.3.4.b) arranged to receive a second carabiner (6.2). Figure 6B shows the discharge cable (1.2) already connected to the first pole (1.3) by means of its carabiner (6.2). Figure 8 shows both carabiners (6.1, 6.2) already fixed to their respective openings (1.3.4.a, 1.3.4.b) so as to allow the hoisting of the ground connection device (1), keeping the discharge cable (1.2) safe.

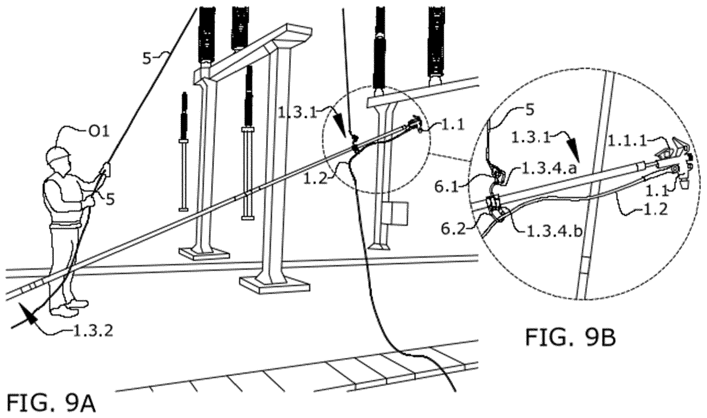

- Figure 9A shows the operation of pulling the hoisting rope or cable (5), through a first strand or line of said hoisting rope or cable (5) opposite the other strand containing the end attached to the attachment element (1.3.4) of the ground connection device (1), until the hook (2.1) is located in a lifted position and in a region proximal to the part (3.1) of the electrical installation (3) where the ground connection device (1) is to be fixed. Figure 9B is an enlarged view of the rectangular region shown in Figure 9A with a dashed line performed by means of a new image of the situation.

This lifting operation is carried out by a first operator (O1). In this example, the attachment element (1.3.4) prevents the discharge cable (1.2) from interfering with the poles (1.3, 2.3) during the operation of installing or removing the ground connection device (1). Additionally, said attachment element (1.3.4) allows the falling of the grounding clamp (1.1) to be stopped if it accidentally comes off the first pole (1.3) during the installation process. For example, Figure 7 illustrates how grounding clamp (1.1) would be left hanging if it accidentally comes off the first pole (1.3).

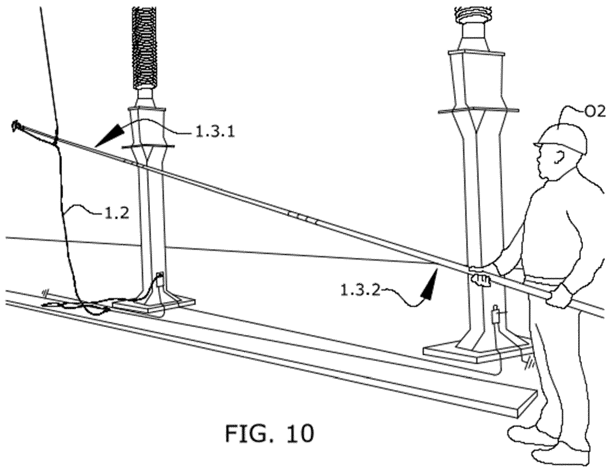

Figure 10 shows an intermediate position in the hoisting of the ground connection device (1) which is similar to the position that would be adopted when lowering is carried out during the disassembly of the grounding clamp (1.1) coupled to the first pole (1.3). The last part of the end of the discharge cable (1.2) is seen to be connected to the grounding installation.

To facilitate hoisting, a second operator (O2) accompanies the first pole through the longitudinal region (or user-operable region) (R) proximal to the second end (1.3.2) to facilitate the hoisting thereof.
- While the grounding clamp (1.1) remains hoisted, the grounding clamp (1.1) is positioned in the part (3.1) of the electrical installation (3) where it is to be fixed by acting by means of the first pole (1.3).

Once the grounding clamp (1.1) is positioned, the second operator (O2) acts on the first coupling means (1.1.1) to close the coupling of the grounding clamp (1.1) for the fixing thereof to the part (3.1) of the electrical installation (3) while the first operator (O1) maintains a position spaced apart from the second operator (O2) and at the same time holds the hoisting rope or cable (5) for supporting the weight of the first pole (1.3). The position of the first operator (O1) must take care that the hoisting rope or cable (5) does not get in the way of the discharge cable (1.2). The operator (O2) only handles the first pole (1.3) and it is kept spaced apart from the discharge cable (1.2).

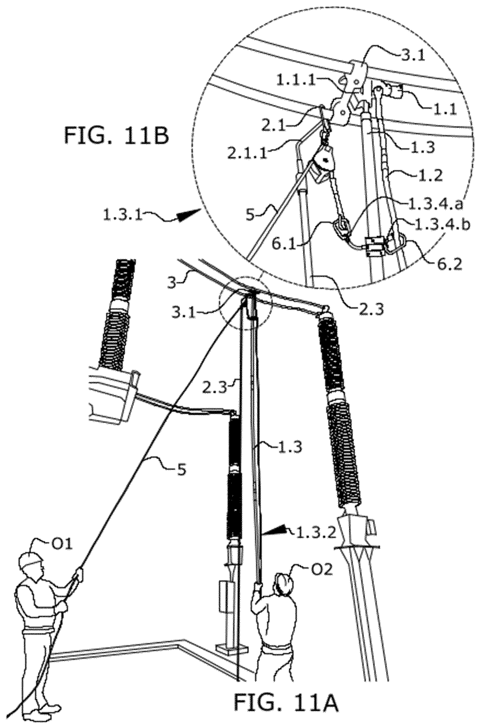

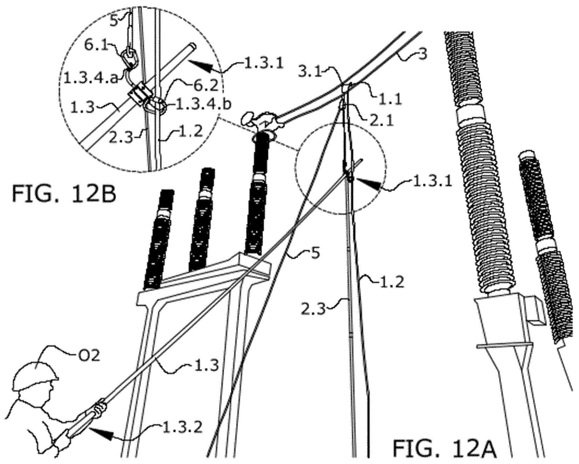

An example of how to carry out this step can be observed in Figures 11A and 11B, where it can be seen how the grounding clamp (1.1) is oriented in the connection site of the electrical installation (3.1) where it is required (for example, in one of the phases of the conductor of the installation) and it is then fixed. The enlarged view of Figure 11B shows how the hook (2.1) of the hoisting device (2) is kept hanging from a conductor close to the conductor where the grounding clamp (1.1) is fixed such that the most important mass of the ground connection device (1) hangs from this hook (2.1) and does not interfere in the operation for adjusting the position and orientation of the grounding clamp (1.1) to later establish the fixing thereof.
- Decoupling the first pole (1.3) from the grounding clamp (1.1) by acting on the second coupling means (1.1.2), giving rise to a situation such as the one illustrated in Figure 12A, where the grounding clamp (1.1) is kept fixed to the electrical installation (3) while the first pole (1.3) is lowered in a controlled manner by the first operator (O1) securing the hoisting rope or cable (5) by means of the same pulley (2.2).
- Lowering the first pole (1.3) to the ground by means of the hoisting rope or cable (5) guided by the discharge cable (1.2) extending from the grounding clamp (1.1) to the ground where the grounding point is located, as shown in Figure 10.

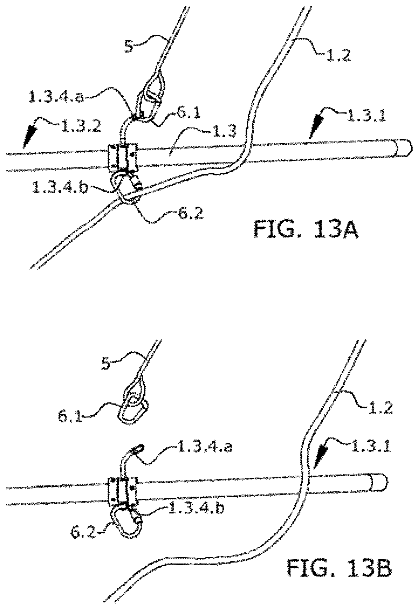

- Figure 13A shows the end situation with the pole (1.3) lowered while the discharge cable (1.2) is still connected with the second opening (1.3.4.b) through a carabiner (6.2).
- The next step then consists of releasing the first pole (1.3) from the discharge cable (1.2) once on the ground, as observed in Figure 13B. Thus, the carabiners (6.1, 6.2) are then decoupled from the first pole and the following part of the electrical installation (for example, another phase) to be grounded with a new grounding clamp (1.1) and its discharge cable (1.2) is then addressed. In this case, the first pole (1.3) can be reused.
- Releasing the first end of the hoisting rope or cable (5) from the attachment element (1.3.4) of the ground connection device (1).
- Releasing the second hook (2.1) by acting on the second pole (2.3).

Once these steps have been carried out, the first pole (1.3) is free, for example, to combine it with a new grounding clamp (1.1) or to recover an already installed grounding clamp (1.1).

The disassembly method for disassembling the grounding clamp (1.1) would be the opposite of that described in the assembly operation, where the first pole (1.3) is lifted by means of the hoisting device (2) until achieving the coupling with the grounding clamp (1.1). In this situation, the grounding clamp (1.1) is disconnected from the electrical installation and therefore the step of lowering can be done in a controlled manner. Given that before the first pole (1.3) is raised the carabiners (6.1, 6.2) have been incorporated and the discharge cable (1.2) has been passed through one of them, any failure in the coupling of the grounding clamp (1.1) would give rise to a safety situation such as the one described in the hoisting operation.

In alternative embodiments, some of the steps do not require the above step and can be executed simultaneously in a different order from what has been described.

## Claims

1. A ground connection device (1) for the discharge of electrical installations (3) comprising:
- a grounding clamp (1.1) with first coupling means (1.1.1) adapted for being coupled to a part (3.1) of an electrical installation (3);
- a discharge cable (1.2) adapted for putting the grounding clamp (1.1) and a grounding element (4) in electrical communication;
- a first pole (1.3) with a first end (1.3.1) and a second end (1.3.2) opposite the first end (1.3.1), wherein the first pole (1.3) comprises:
second coupling means (1.3.3) located at the first end (1.3.1) adapted for being coupled to the grounding clamp (1.1),
at least one longitudinal, user-operable region (R) proximal to the second end (1.3.2), wherein the user-operable region (R) comprises:
means (1.3.2.a) for acting on the first coupling means (1.1.1) to open and close the grounding clamp (1.1), allowing the coupling to the part (3.1) of the electrical installation (3), and
means (1.3.2.a) for acting on the second coupling means (1.3.3) to couple and decouple the grounding clamp (1.1) with respect to the pole (1.3); and
an attachment element (1.3.4) for being attached to a hoisting rope or cable.

2. The ground connection device (1) according to claim 1, wherein the attachment element (1.3.4) is positioned proximal to the first end (1.3.1) of the first pole (1.3) and spaced apart from said first end (1.3.1).

3. The ground connection device (1) according to any of the preceding claims, wherein the attachment element (1.3.4) is rotational about the first pole (1.3).

4. The ground connection device (1) according to any of the preceding claims, wherein the attachment element (1.3.4) comprises a first opening (1.3.4.a) for the guided passage of the hoisting rope or cable and a second opening (1.3.4.b) for the passage of the discharge cable (1.2).

5. The ground connection device (1) according to the preceding claim, wherein the first opening (1.3.4.a) and the second opening (1.3.4.b) are located on opposite sides with respect to the first pole (1.3).

6. A hoisting device (2) suitable for hoisting a ground connection device (1) according to any of the preceding claims, comprising:
- a hook (2.1) configured for hanging on a part of the electrical installation (3);
- a second pole (2.3) attached to the hook (2.1);
- a pulley (2.2) attached to the hook (2.1) for the passage of a hoisting rope or cable of a ground connection device (1);
wherein the hook (2.1) comprises a mechanical connection (2.1.1) for the attachment with the second pole (2.3) configured for keeping the pole spaced apart from the pulley (2.2).

7. The hoisting device (2) according to claim 6, wherein the hook (2.1) comprises a load anchor (2.1.4) for the attachment with the pulley (2.2) such that, in the operative mode, the hook, the load anchor (2.1.4), and the pulley (2.2) establish a straight load line.

8. The hoisting device (2) according to claim 7, wherein the straight load line allows a position parallel to the direction in which the second pole (2.3) extends.

9. The hoisting device (2) according to any of claims 6 to 8, wherein the attachment between the pulley (2.2) and the hook (2.1) is rotational.

10. The hoisting device (2) according to any of claims 6 to 9, wherein the attachment between the second pole (2.3) and the mechanical connection (2.1.1) is by means of an attachment capable of regulating the angular position (2.1.2).

11. The hoisting device (2) according to any of claims 6 to 10, wherein the second pole (2.3) is telescopic.

12. A ground connection system comprising:
- a ground connection device (1) according to any of claims 1 to 5,
- a hoisting device (2) according to any of claims 6 to 11,
- a hoisting rope or cable.

13. An installation method for installing a ground connection device (1) by means of a system according to claim 12, comprising the following steps:
a) installing the hoisting rope or cable in the pulley (2.2) of the hoisting device (2);
b) fixing a first end of the hoisting rope or cable in the attachment element (1.3.4) of the ground connection device (1);
c) lifting the hook (2.1) by means of the second pole (2.3) and hanging the hook (2.1) in a part of the electrical installation (3) close to the part of the electrical installation (3) where the grounding clamp (1.1) of the ground connection device (1) is to be fixed for the discharge of said electrical installation (3);
d) pulling on the hoisting rope or cable, through the strand opposite the strand which contains the end attached to the attachment element (1.3.4) of the ground connection device (1), until the grounding clamp (1.1) is lifted and in a region proximal to the position where the grounding clamp (1.1) of the ground connection (1) is to be fixed;
e) while the grounding clamp (1.1) remains hoisted, positioning the grounding clamp (1.1) in the part (3.1) of the electrical installation (3) where it is to be fixed by acting by means of the first pole (1.3), and once the grounding clamp (1.1) is positioned, acting on the first coupling means (1.1.1) to close the coupling for the fixing thereof to the part (3.1) of an electrical installation (3);
f) decoupling the first pole (1.3) from the grounding clamp (1.1) by acting on the second coupling means (1.1.2);
g) lowering the first pole (1.3) by means of the hoisting rope or cable;
h) releasing the first end of the hoisting rope or cable from the attachment element (1.3.4) of the ground connection device (1);
i) releasing the hook (2.1) by acting on the second pole (2.3).

14. The installation method according to claim 13, wherein the second opening (1.3.4.b), which is intended for the discharge cable (1.2), further comprises manual opening means, and wherein the method further comprises the following steps:
- before step d) of hoisting the grounding clamp (1.1), passing the discharge cable (1.2) through the second opening (1.3.4.b);
- in step g), lowering the first pole (1.3) guided by the discharge cable (1.2); and
- releasing the first pole (1.3) from the discharge cable (1.2).

15. The system according to claim 12 and the method according to any of claims 13 to 14, wherein
- the attachment between the hoisting rope or cable and the first opening (1.3.4.a) of the attachment element (1.3.4) with the first pole (1.3), or
- the attachment between the discharge cable (1.2) and the second opening (1.3.4.b) of the attachment element (1.3.4) with the first pole (1.3), or
- both
is by means of a carabiner (6.1, 6.2).
